# EUROPÄISCHE PATENTSCHRIFT

(11) **EP 2 853 427 B1**
(45) Veröffentlichungstag und Bekanntmachung des Hinweises auf die Patenterteilung: **14.08.2019**
(21) Anmeldenummer: 14180965.7
(22) Anmeldetag: 14.08.2014
(51) Int. Cl.: B60J 7/12, F16C 11/04, F16C 33/20

(54) **Verdeckanordnung**
Roof assembly
Agencement de toit

(30) Priorität: 26.08.2013 DE 102013216918
(43) Veröffentlichungstag der Anmeldung: 01.04.2015
(73) Patentinhaber: Magna Car Top Systems GmbH, 74321 Bietigheim-Bissingen (DE)
(72) Erfinder: Kailasapathi, Shankar, 70199 Stuttgart (DE)
(74) Vertreter: Rausch, Gabriele

(56) Entgegenhaltungen:
- EP-A2- 1 798 430
- EP-A2- 2 141 366
- EP-A2- 2 269 855
- DE-U1- 29 516 619
- DE-U1-202013 003 967

## Beschreibung

### Gebiet der Erfindung

Die vorliegende Erfindung betrifft eine Verdeckanordnung für ein Cabriolet, wobei ein Verdeck in eine Offenstellung und in eine Geschlossenstellung bringbar ist, umfassend eine Vielzahl von Spriegeln und Lenkern, wobei die Spriegel und Lenker mittels einer antreibbaren Verdeckkinematik relativ zueinander bewegbar sind, und wobei in zumindest einem Verdeckbauteil, ein Niet-Bolzen oder eine Niet-Mutter angeordnet ist, wobei das Verdeckbauteil ein erster Spriegel oder ein erster Lenker oder eine karosseriefeste Lagerstelle ist, welcher als mechanischer Anschlag für einen zweiten Spriegel oder einen zweiten Lenker ausgebildet ist, der relativ zum Verdeckbauteil beweglich ist, wobei der Niet-Bolzen oder die Niet-Mutter oder der zweite Lenker aus einem metallischen Werkstoff gefertigt sind.

### Stand der Technik

Ein Anschlag eines Hebels ist aus der EP1990223A1 bekannt, bei der der Anschlag mit einem an der Spannstange ausgebildeten zylinderförmigen Element zur Anlage kommt und ein Weiterdrehen des zweiten Hebels verhindert.

Bei der genannten Anwendung kommt dabei Metall auf Metall zur Berührung, was in der Fahrgastzelle eines Cabriolets zu einer ungewollten Geräuschentwicklung führt.

Aus der WO2008125312A1 ist ein Zweikomponententeil bekannt bei der ein Kern einstückig mit einem Nagel ausgebildet ist und daher aus dem gleichen Material wie der Nagel. Der Kern ist mit Kunststoff umspritzt, die Außenform dieser Umhüllung ist entsprechend der gewünschten Funktion des Funktionsabschnitts ausgebildet.

In der DE10118674B4 wird ein Lagerzapfen, für Radaufhängungen von Kraftfahrzeugen, zur Erzielung einer definierten Außenkontur mit einer Kunststoffummantelung versehen, wobei zur Erzielung der definierten Außenkontur der Lagerzapfen in einer Spritzgussform mit Kunststoff umspritzt ist.

Aus der EP 2 269 855 ist eine Gelenkeinrichtung zwischen Lenkern eines Gestänges eines Faltverdecks für einen Personenkraftwagen bekannt, das von einer einen Fahrgastraum überspannenden Schließstellung in eine in einem Heckraum abgelegte Offenstellung verstellbar ist und vice versa, wobei die Lenker mittels einer Nieteinrichtung in Lage gehalten werden, die einen Niet mit Nietköpfen und einen Lagerbohrungen der Lenker durchdringenden Nietschaft umfasst, wobei zwischen Nietschaft des Niets und ersten und zweiten Lagerbohrungen der ersten und zweiten Lenker sich eine Lagerhülse erstreckt, die mit einem ersten kragenartigen Anschlag an einem ersten Lenker anliegt und sich mit einem zum ersten Anschlag beabstandeten zweiten Anschlag an einem ersten Nietkopf des Niets abstützt und dass ein zweiter Nietkopf an einen Schaftanschlag der Lagerhülse herangeführt ist.

Aus der EP 2 141 366 ist eine Ausgestaltung einer Niete bekannt, umfassend einen Setzkopf, einen Schaft und einen Schließkopf, wobei die Niete im Bereich des Schaftes einen rechteckigen, polygonförmigen bzw. abgeflachten Querschnitt aufweist. Dabei kann die Niete im Bereich des Schaftes mit einer Beschichtung versehen sein, wobei die Beschichtung mittels gängiger Oberflächenbeschichtungsverfahren, durch Umspritzen mit Kunststoff oder durch Sintern erzeugt werden kann.

### Zusammenfassung der Erfindung

Es ist eine Aufgabe der Erfindung, eine Verdeckanordnung derart zu verbessern, dass insbesondere eine ungewünschte Geräuschentwicklung im Innenraum eines Cabriolets vermieden wird.

Eine weitere Aufgabe ist insbesondere eine Reduktion von Bauteilen und somit eine Reduktion von Gewicht und Fertigungskosten.

Die Lösung der Aufgabe erfolgt durch eine Verdeckanordnung für ein Cabriolet mit Merkmalen gemäß Anspruch 1.

In Cabriolets wird ein Verdeck mittels einer antreibbaren Verdeckkinematik über eine Vielzahl von Gestängen, auch als Spriegel oder Lenker bezeichnet, in eine Offenstellung bzw. in eine Geschlossenstellung gebracht, dabei sind die Spriegel bzw. Lenker relativ zueinander beweglich bzw. verdrehbar miteinander verbunden. Um eine sichere Funktion der Verdeckkinematik zu gewährleisten werden an hierfür erforderlichen Stellen Niet-Bolzen bzw. Niet-Muttern an Spriegeln oder Lenkern angeordnet, welche ein ungewolltes Weiterbewegen bzw. Verdrehen von miteinander verbundenen Spriegeln und Lenkern verhindern.

Da die Niet-Bolzen oder Niet-Muttern sowie die Spriegel und Lenker im Normalfall aus einem metallischen Werkstoff gefertigt sind, treten bei Kontakt zwischen Niet-Bolzen oder Niet-Mutter und den Spriegeln bzw. Lenkern ungewollte "Knackgeräusche" auf, welche von den Fahrzeuginsassen oft als unangenehm empfunden werden.

Zur Vermeidung von ungewollten "Knackgeräuschen" wird deshalb erfindungsgemäß der Niet-Bolzen bzw. die Niet-Mutter an dem Spriegel bzw. Lenker angeordnet, wodurch die Geräuschentwicklung reduziert wird, da an der Kontaktstelle zwischen dem Niet-Bolzen bzw. der Niet-Mutter und dem Spriegel bzw. Lenker ein nichtmetallischer Werkstoff angeordnet ist, welcher geräuschdämpfende Eigenschaften aufweist.

Der Niet-Bolzen wird bevorzugt durch Vertaumeln mit dem zweiten Spriegel oder dem zweiten Lenker dauerhaft verbunden. Es ist im Rahmen der Erfindung alternativ jedes dem Fachmann bekannte Verbindungsverfahren anwendbar, beispielsweise Schweißen, Kleben oder Verpressen.

Die Niet-Mutter entspricht im Wesentlichen geometrisch einem Niet-Bolzen ist jedoch innen hohl und weist ein Innengewinde sowie eine Durchgangsbohrung auf. Die Niet-Mutter wird durch sogenanntes Setzen mit dem Spriegel oder Lenker dauerhaft verbunden. Die Niet-Mutter wird hierzu auf einen Gewindedorn eines Setzwerkzeuges geschraubt und danach in eine Bohrung des Spriegels oder Lenkers eingesetzt. Durch den Hub des Setzwerkzeugs während des Fügevorgangs, bildet sich ein Schließkopf der Niet-Mutter, wodurch eine feste Verbindung zwischen der Niet-Mutter und dem ersten Spriegel oder dem ersten Lenker entsteht. Die Niet-Mutter wird bevorzugt an einer Stelle eingesetzt an welcher die Zugänglichkeit für ein Niet-Bolzen-Werkzeug nur mit hohem Aufwand oder gar nicht möglich ist.

Dies kann beispielsweise an einer karosserieseitigen Hauptlagerstelle der Fall sein. Das Hauptlager ist meist ein Druckgussteil aus Aluminium oder Magnesium, welches im Heckbereich eines Kraftfahrzeugs fest mit der Karosserie des Kraftfahrzeugs verbunden ist, und an der das Gestänge der Verdeckkinematik drehbar, zur Aufnahme der Kräfte und Momente, gelagert ist. Im Stand der Technik weist das Hauptlager dabei an der für einen mechanischen Anschlag vorgesehenen Stelle, zur Befestigung des mechanischen Anschlags, in einem extra dafür erforderlichen Fertigungsschritt, ein Gewinde auf. In das Gewinde wird der mechanische Anschlag mit einer Schraube eingeschraubt und mit einer Mutter in Position gehalten. Um diese aufwendige und teure Montage zu vermeiden wird nun erfindungsgemäß bevorzugt eine Niet-Mutter, in eine dafür vorgesehene Bohrung, in das Hauptlager eingesetzt und anschließend gefügt.

Der Niet-Bolzen oder die Niet-Mutter weist dabei eine erste Werkstoffkomponente auf, wobei die erste Werkstoffkomponente im Wesentlichen den eigentlichen Niet-Bolzen oder die Niet-Mutter darstellt und bevorzugt metallisch ist. Metall hat den Vorteil, dass es in der Regel höhere Kräfte als ein Nichtmetall aufnehmen kann, wodurch die Bauteile in der Regel kleiner dimensionierbar sind. Die zweite Werkstoffkomponente ist ein Nichtmetall und wird zur Geräuschreduzierung bei Kontakt zwischen Niet-Bolzen oder Niet-Mutter und dem zweiten Spriegel oder dem zweiten Lenker eingesetzt, da ein Nichtmetall in der Regel bessere Dämpfungseigenschaften als ein Metall aufweist.

Es wird erfindungsgemäß der Niet-Bolzen oder die Niet-Mutter mit der zweiten Werkstoffkomponente vorgesehen, da die Herstellung eines solchen "Hybridbauteils" einfacher und kostengünstiger herstellbar ist als ein Anbringen eines Nichtmetalls an einem Spriegel oder an einem Lenker.

In einer weiteren erfinderischen Ausführung können beide Bauteile, der Niet-Bolzen oder die Niet-Mutter und der zweite Spriegel oder der zweite Lenker mit der zweiten Werkstoffkomponente versehen sein.

Der Niet-Bolzen oder die Niet-Mutter und der zweite Spriegel oder der zweite Lenker sind in einer weiteren erfinderischen Ausführungsform als Kaltfließpressteil hergestellt. Das Kaltfließpressen erlaubt eine einfache und kostengünstige Herstellung von Bauteilen, wobei das Bauteil mit engen Toleranzen, schöner Oberflächengüte und erhöhter Festigkeit hergestellt werden kann.

Die Spriegel und Lenker können erfindungsgemäß auch in einem anderen Verfahren, beispielsweise dem Thixomolding hergestellt sein. Hierbei wird das Bauteil aus Magnesium in einem speziellen Verfahren hergestellt. Lenker aus Magnesium werden bevorzugt verwendet, wenn eine Reduktion des Bauteilgewichts erwünscht oder gefordert ist.

Zur Herstellung der genannten Bauteile als Kaltfließpressteile wird bevorzugt Stahl verwendet. Es ist jedoch auch denkbar, dass Aluminium als Werkstoff verwendet wird. Im Prinzip sind jedoch alle Metalle, die dem Fachmann zur Herstellung von Kaltfließpressteilen bekannt sind, denkbar.

Als zweite Werkstoffkomponente wird bevorzugt Kunststoff verwendet, da sich Kunststoff besonders zum Umspritzen von metallischen Bauteilen eignet. Es wird dabei in Abhängigkeit von den Anforderungen an das Bauteil bevorzugt Ethylen-Propylen-Dien-Monomer (EPDM), Thermoplastische Elastomere (TPE) sowie PA6GF30, ein Polyamid 6 mit 30% Glasfaser und Graphit, verwendet. Es versteht sich jedoch von selbst, dass jeder dem Fachmann bekannte geeignete Kunststoff oder jeder bekannte Nichtmetall-Werkstoff, der zum Umspritzen von metallischen Bauteilen geeignet ist, eingesetzt werden kann.

Zur besseren Verbindung der zweiten Werkstoffkomponente mit der ersten Werkstoffkomponente, weist in einer erfinderischen Ausführung die erste Werkstoffkomponente eine Oberflächenstruktur auf, welche eine verbesserte stoffschlüssige Verbindung zwischen der ersten Werkstoffkomponente und der zweiten Werkstoffkomponente ermöglicht.

Erfindungsgemäß ist die erste Werkstoffkomponente des Niet-Bolzens oder der Niet-Mutter, so ausgebildet, dass eine formschlüssige Verbindung zwischen der ersten und zweiten Werkstoffkomponente erreicht wird. Erfindungsgemäß wird die zweite Werkstoffkomponente durch zumindest abschnittsweises Umspritzen der ersten Werkstoffkomponente im Bereich des Kopfabschnitts auf den Niet-Bolzen oder der Niet-Mutter aufgebracht. Dieses Verfahren ist einfach und kostengünstig realisierbar.

Erfindungsgemäß ist der Niet-Bolzen beispielsweise mit einem Lenker und/oder einem Spriegel einer antreibbaren Verdeckkinematik dauerhaft verbunden. Die antreibbare Verdeckkinematik dient im Wesentlichen zum Öffnen und Schließen eines über Spriegel und Lenker mit der Karosserie eines Kraftfahrzeugs verbundenen Verdecks.

Da der Spriegel und/oder der Lenker im Bereich des Fahrzeuginnenraums angeordnet sein kann und im Falle eines Unfalls der Kopf eines Fahrzeuginsassen in Kontakt mit dem erfindungsgemäßen Niet-Bolzen oder der Niet-Mutter kommen kann, ist an den betroffenen Kanten ein Radius von zumindest 3 mm vorzusehen, um einen geforderten Kopfaufprallschutz im Innenraum einer Fahrgastzelle eines Kraftfahrzeugs zu erfüllen. Erfindungsgemäß ist hierbei die zweite Werkstoffkomponente jener Teil des Niet-Bolzens der in den Innenraum der Fahrgastzelle ragt, wodurch schon beim Umspritzen der ersten Werkstoffkomponente des Niet-Bolzen oder der Niet-Mutter der geforderte 3mm Radius mitberücksichtigt wird. Erfindungsgemäß kann der Niet-Bolzen oder die Niet-Mutter in den nicht umspritzten Bereichen einen Oberflächenschutz aufweisen, der zur Verbesserung der Oberflächengüte bzw. als Korrosionsschutz vorgesehen werden kann. Beispielsweise kann der Oberflächenschutz ein leichtentfernbarer wie Fett oder Öl sein oder ein schwerentfernbarer wie Vernickeln, Verchromen oder Verzinken.

Damit die umspritzte zweite Werkstoffkomponente sicher auf der ersten Werkstoffkomponente des Niet-Bolzen oder der Niet-Mutter gehalten wird weist der Niet-Bolzen oder die Niet-Mutter eine spezielle Geometrie auf, je nachdem ob der Niet-Bolzen oder die Niet-Mutter als vertikaler mechanischer Anschlag oder als seitlicher mechanischer Anschlag verwendet wird. Die erfindugsgemäße Verwendung des Niet-Bolzens oder der Niet-Mutter als mechanischer Anschlag ist erforderlich, um ein ungewolltes Weiterbewegen eines weiteren Lenkers oder Spriegels zu verhindern, um so einen Ablauf einer Verdeckkinematik beim Öffnen oder Schließen eines Verdecks eines Cabriolets gezielt durchführen zu können. Solche mechanische Anschläge werden bevorzugt mehrfach parallel links und rechts entlang der Fahrzeuglängsrichtung in Lenkern und/oder Spriegeln verbaut. Falls erforderlich kann ein erfindungsgemäßer Niet-Bolzen oder eine erfindungsgemäße Niet-Mutter auch in anderen Fahrzeugkomponenten, beispielsweise im Hauptlager der Verdeckkinematik eines Verdecks verbaut werden.

Der Niet-Bolzen oder die Niet-Mutter umfasst mehrere Abschnitte, einen Kopfabschnitt, einem Bund, sowie einem Schaftabschnitt.

Erfindungsgemäß ist der Kopfabschnitt des Niet-Bolzens oder der Niet-Mutter jener Teil der mit der zweiten Werkstoffkomponente umspritzt wird, und eine spezielle Geometrie aufweist, um ein sicheres Halten der zweiten Werkstoffkomponente auf ersten Werkstoffkomponente zu garantieren.

Der Bund des Niet-Bolzens oder der Niet-Mutter ist jener Teil der am Spriegel oder Lenker anliegt. Der Durchmesser des Bunds weist einen Durchmesser auf, der größer als die Bohrung im Spriegel oder Lenker ist und somit die Position des Niet-Bolzens oder der Niet-Mutter in Längsrichtung Richtung bestimmt.

Der Schaftabschnitt des Niet-Bolzens oder der Niet-Mutter ist jener Teil der durch die Bohrung zumindest eines Spriegels oder Lenkers ragt. Der Durchmesser des Schafts ist kleiner als die Bohrung des Spriegels oder Lenkers, um ein sicheres Durchstecken zu ermöglichen. Die Schaftlänge des Niet-Bolzens oder der Niet-Mutter ist so gewählt, dass der Schaft durch die Bohrung des Spriegels oder Lenkers ragt. Diese "Überlänge" wird benötigt um den Niet-Bolzen mit dem Spriegel oder Lenker vernieten zu können. Bevorzugt erfolgt der Arbeitsgang durch Vertaumeln.

Die Niet-Mutter wird durch sogenanntes Setzen mit dem Spriegel oder Lenker dauerhaft verbunden.

Bei beiden Verfahren wird das Material des Schafts aufgestaucht, wodurch eine Wulst gebildet wird, deren Durchmesser größer als die Bohrung des Spriegels oder Lenkers ist, wodurch der Niet-Bolzen oder die Niet-Mutter mit dem oder den Spriegeln bzw. Lenkern verbunden wird.

Der Niet-Bolzen oder die Niet-Mutter umfasst einen Kopfabschnitt der so ausgebildet ist dass er als Verliersicherung für die zweite Werkstoffkomponente dient. Die zweite Werkstoffkomponente wird durch Umspritzen eines Abschnitts des Niet-Bolzen oder der Niet-Mutter aufgebracht.

Der Niet-Bolzen oder die Niet-Mutter weist in einer erfinderischen Ausführung einen Kopfabschnitt auf, der im Wesentlichen in Längsachse gesehen zylindrischen Körper aufweist, der bei Verwendung als vertikaler mechanischer Anschlag sich in Richtung des Bunds verjüngt. Durch diese Verjüngung entsteht, im Querschnitt betrachtet eine Keilform, wodurch die umspritzte zweite Werkstoffkomponente verliersicher am Kopfabschnitt angebracht ist. Diese Geometrie hat sich besonders bei Verwendung des Niet-Bolzen oder der Niet-Mutter als vertikaler mechanischer Anschlag als besonders günstig gezeigt.

Wird der Niet-Bolzen oder die Niet-Mutter als seitlicher mechanischer Anschlag verwendet, weist der Kopfabschnitt in Umfangsrichtung zumindest eine Vertiefung und/oder Erhöhung auf, wobei die Vertiefung beispielsweise nutenförmig oder rillenförmig, die Erhöhung beispielsweise rippen- oder wulstförmig ausgebildet sein kann.

Erfindungsgemäß wird der Kopfabschnitt des Niet-Bolzens oder der Niet-Mutter mit der zweiten Werkstoffkomponente umspritzt. Aufgrund der zuvor beschriebenen Geometrie des Kopfabschnitts des Niet-Bolzens oder der Niet-Mutter ist die zweite Werkstoffkomponente verliersicher an der ersten Werkstoffkomponente angebracht.

In einer weiteren erfinderischen Ausführung weist der Niet-Bolzen auch im Bereich des Schaftabschnitts eine Umspritzung auf.

Dabei kann erfindungsgemäß der Schaftabschnitt des Niet-Bolzens in Längsrichtung eine Erhöhung oder eine Vertiefung aufweisen, wodurch ein Verdrehen der umspritzten zweiten Werkstoffkomponente am Schaftabschnitt vermieden werden kann. Die Längsrichtung des Niet-Bolzens ist jene Richtung die parallel zur Rotationsachse des Niet-Bolzens verläuft. Der Niet-Bolzen kann eine Abstufung aufweisen, wenn zwei oder mehr Spriegel bzw. Lenker miteinander verbunden werden. Die Abstufung dient als weiterer Bund, an dem sich der zweite Spriegel bzw. Lenker abstützt, es wird dadurch auch sichergestellt, dass der Niet-Bolzen von der richtigen Seite verbaut wird, da die zu verbindenden Spriegel und/oder Lenker den Schaftabschnitten des Niet-Bolzens entsprechende Lageröffnungen aufweisen.

Der umspritzte Schaftabschnitt des Niet-Bolzen oder der Niet-Mutter dient als Lagerung, wenn mehrere Spriegel und/oder Lenker miteinander drehbar verbunden werden sollen, da aufgrund der Kunststoffumspritzung eine reduzierte Reibung zwischen Niet-Bolzen oder einer Niet-Mutter und dem Spriegel und/oder Lenker, da ein Kontakt zwischen Kunststoff und Metall auftritt, entsteht.

Bevorzugt wird als Werkstoff für den Schaftabschnitt Polyamid (PA6, PA66), Polyoxymethylen (POM) oder Iglidur (X/Z/G) aufgrund ihrer guten Gleitlagereigenschaften verwendet.

Diese Lösung biete den Vorteil, dass sie wesentlich kostengünstiger ist, da weniger Bauteile und Montageschritte erforderlich sind, beispielsweise benötigt man keine sonst erforderlichen Kunststoffbuchsen, die in den dafür vorgesehenen Lageröffnungen der Spriegel und/oder Lenker eingepresst werden müssten.

### Kurzbeschreibung der Zeichnungen

Die Erfindung wird im Folgenden beispielhaft unter Bezugnahme auf die Zeichnungen beschrieben.
- Fig. 1: ist eine perspektivische Ansicht eines erfindungsgemäßen Niet-Bolzen.
- Fig. 2: ist eine weitere perspektivische Ansicht eines erfindungsgemäßen Niet-Bolzen.
- Fig. 3: ist eine perspektivische Ansicht einer erfindungsgemäßen Niet-Mutter.
- Fig. 4: ist eine Schnittansicht einer erfindungsgemäßen NietMutter gemäß Fig. 3.
- Fig. 5: perspektivische Ansicht eines weiteren erfinderischen Niet-Bolzens.
- Fig. 6: weitere perspektivische Ansicht gemäß Fig. 5.
- Fig. 7: Schnittdarstellung eines erfindungsgemäßen Niet-Bolzen gemäß Fig. 5.
- Fig. 8,9: zeigen eine perspektivische Ansicht eines verbauten Niet-Bolzens gemäß Fig. 5.
- Fig. 10: zeigt eine erfindungsgemäße perspektivische Ansicht eines umspritzten Niet-Bolzen gemäß Fig. 1.
- Fig. 11: Schnittdarstellung eines umspritzten Niet-Bolzen gemäß Fig. 1.
- Fig. 12: Schnittdarstellung eines umspritzten Niet-Bolzen gemäß Fig. 2.
- Fig. 13: Schnittdarstellung einer umspritzten Niet-Mutter im verbauten Zustand.
- Fig. 14,15: Schnittdarstellung von umspritzten Niet-Bolzen im verbauten Zustand.

### Detaillierte Beschreibung der Erfindung

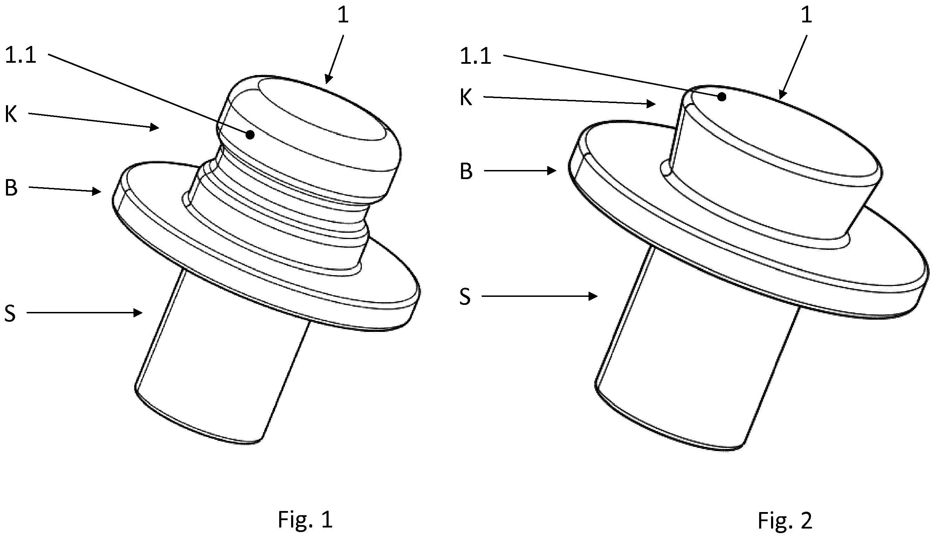

In Fig. 1 ist ein erfindungsgemäßer Niet-Bolzen 1 in einer perspektivischen Ansicht dargestellt, wobei nur die erste Werkstoffkomponente 1.1 dargestellt ist. Bevorzugt wird der Niet-Bolzen 1 als Kaltfließpressteil aus Stahl, kostengünstig, hergestellt. Der Niet-Bolzen 1 weist einen Kopfabschnitt K einen Bund B sowie einen Schaftabschnitt S auf. Der Kopfabschnitt K weist eine Geometrie auf, welche eine spätere Umspritzung mit einer zweiten Werkstoffkomponente 1.2 (nicht dargestellt) begünstigt. Der Kopfabschnitt K weist eine am Außenumfang umlaufende Vertiefung auf, wodurch die zweite Werkstoffkomponente 1.2 nach dem Umspritzen verliersicher mit der ersten Werkstoffkomponente 1.1 verbunden ist. Der Kopfabschnitt kann auch mehrere Vertiefungen, oder alternativ Erhöhungen in Form von beispielsweise Wulsten oder Rippen, aufweisen.

Diese Ausführung des Kopfabschnitts K wird bevorzugt dann ausgewählt, wenn der Niet-Bolzen 1 als seitlicher mechanischer Anschlag eingesetzt wird. Der Kopfabschnitt K jedes Niet-Bolzens 1,3 oder jeder Niet-Mutter 2 kann zusätzlich eine Oberflächenstruktur aufweisen, welche eine stoffschlüssige Verbindung mit der zweiten Werkstoffkomponente 1.2 (nicht dargestellt) begünstigt.

Fig. 2 zeigt einen weiteren Niet-Bolzen 1 in perspektivischer Ansicht, wobei der Niet-Bolzen 1 einen zum Bund B hin verjüngenden Kopfabschnitt K aufweist. Diese Ausführung wird bevorzugt dann eingesetzt, wenn der Niet-Bolzen 1 als vertikaler Anschlag verwendet wird.

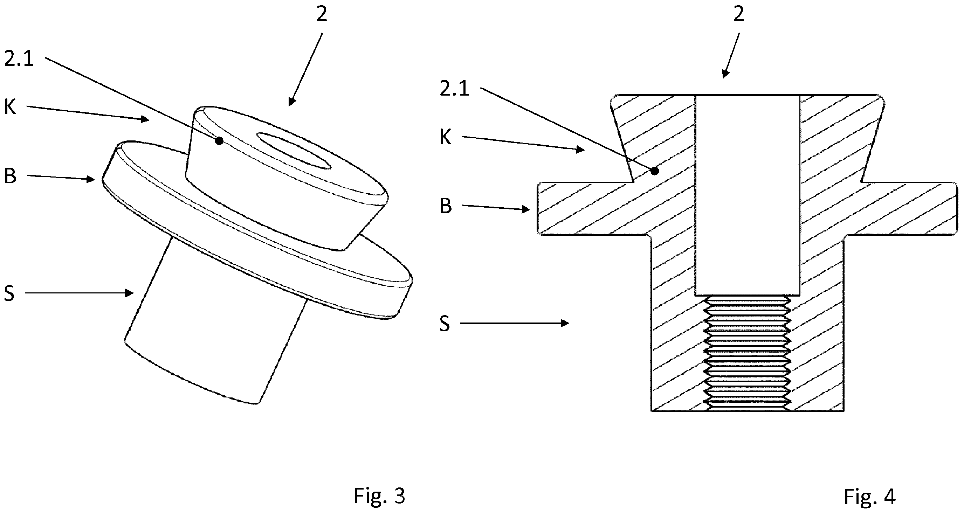

Die Niet-Mutter 2 weist eine im Wesentlichen gleiche Geometrie wie der Niet-Bolzen 1 auf. In Fig. 3 ist eine Niet-Mutter 2 in perspektivischer Ansicht dargestellt, wobei der Kopf sich in Richtung Bund B verjüngt. Niet-Muttern 2 werden bevorzugt dann eingesetzt, wenn die Zugänglichkeit für ein Nietwerkzeug nicht gegeben ist.

Fig. 4 ist eine Schnittansicht einer erfindungsgemäßen Niet-Mutter 2 gemäß Fig. 3, aus der ersten Werkstoffkomponente 2.1 bestehend, dargestellt. Die Niet-Mutter 2 ist, während der Niet-Bolzen 1 massiv ausgebildet ist, innen hohl und weist einen Gewindeabschnitt auf, in welchen ein Setzwerkzeug vor einem Fügevorgang eingeschraubt wird. Der Gewindeabschnitt ist im Schaftabschnitt S angeordnet. Die Durchgangsbohrung ist erforderlich, um das Setzwerkzeug in die Niet-Mutter 2 einzuschrauben, bzw. um es nach einem Fügevorgang wieder auszuschrauben.

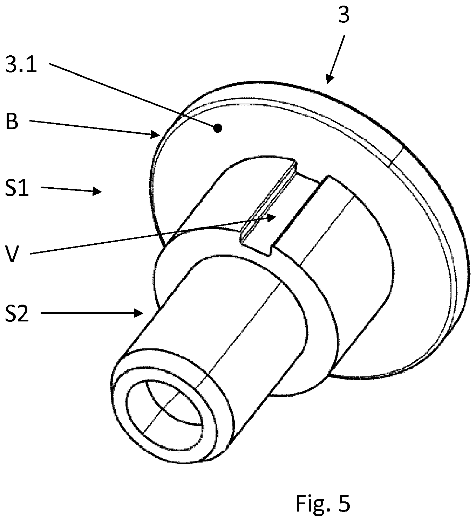

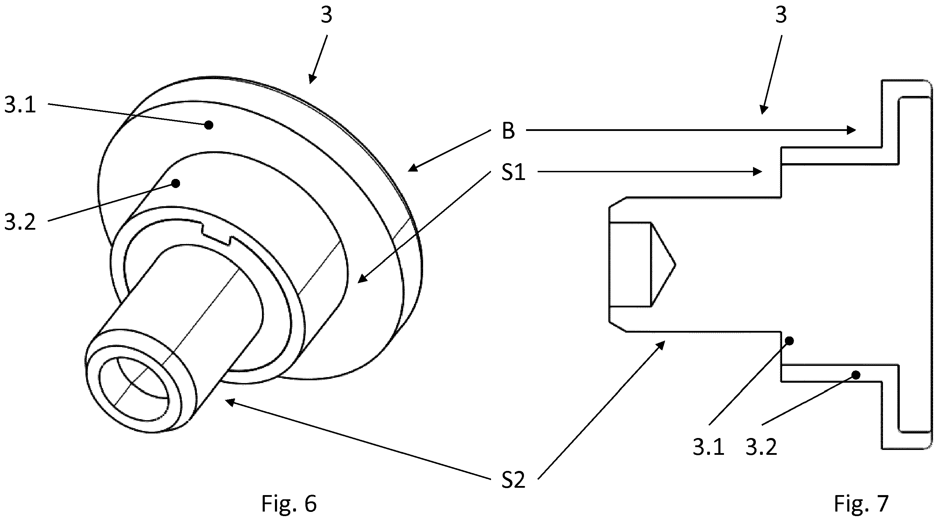

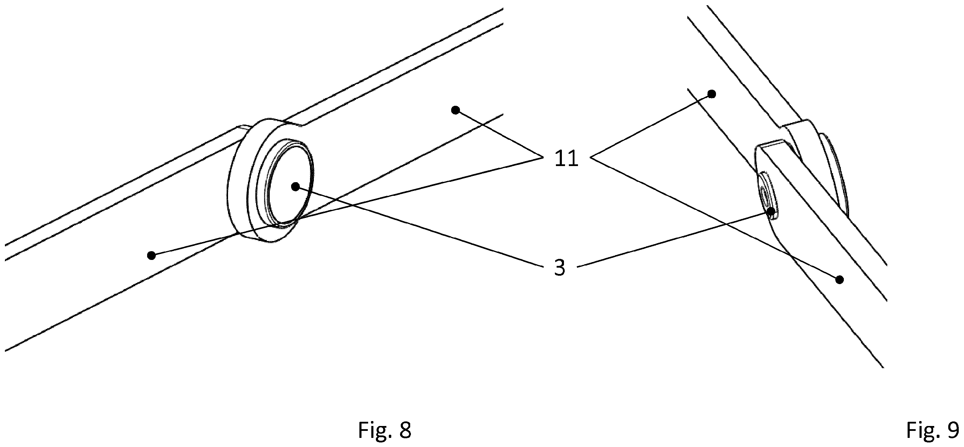

Eine weitere Darstellung eines Niet-Bolzens wird in Fig. 5, wobei der Niet-Bolzen 3 aus der ersten Werkstoffkomponente 3.1 besteht, dargestellt. Der Niet-Bolzen 3 weist keinen Kopfabschnitt K auf jedoch zwei Schaftabschnitte S1 und S2. Der erste Schaftabschnitt S1 weist eine in Längsrichtung verlaufende Vertiefung auf. Diese kann alternativ auch als Erhöhung ausgebildet sein, bzw. mehrfach am Umfang des ersten Schaftabschnitts S1 angeordnet sein und dient als Verdrehsicherung V für die am ersten Schaftabschnitt S1 umspritzte zweite Werkstoffkomponente. Diese Ausführung wird bevorzugt dann angewendet, wenn zwei Spriegel und/oder Lenker 11 drehbar, wie in Fig. 7 und Fig. 8 dargestellt, miteinander verbunden werden sollen. Der zweite Schaftabschnitt S2 weist einen kleineren Durchmesser als der erste Schaftabschnitt S1 auf, wodurch die zu verbindenden Spriegel bzw. Lenker 11 richtig angeordnet am Niet-Bolzen 3 befestigbar sind, da die Spriegel bzw. Lenker 11 entsprechende den Schaftabschnitten S1 und S2 ausgebildete Lageröffnungen aufweisen. Der zweite Schaftabschnitt S2 weist eine Überlänge auf, welche beim Verbinden des Niet-Bolzens 1 oder des Niet-Bolzens 3 zur Verbindung von zumindest einem Spriegel und/oder Lenker 11 zum Vertaumeln benötigt wird. Aufgrund der größeren Durchmesser des Bunds B gegenüber dem ersten Schaftabschnitt S1 bzw. dem ersten Schaftabschnitt S1 gegenüber dem zweiten Schaftabschnitt S2, ist die Position der Spriegel bzw. der Lenker 11 in Längsrichtung des Niet-Bolzens 3 genau definiert.

In Fig. 6 ist der erfindungsgemäße Niet-Bolzen 3 gemäß Fig. 5, mit der zweiten Kunststoffkomponente 3.2 umspritzt, dargestellt. Die zweite Kunststoffkomponente 3.2 ist bevorzugt aus einem Kunststoff ausgebildet, welcher gute Gleitlagereigenschaften, beispielsweise Polyamid, aufweist.

Fig. 7 ist eine Schnittdarstellung des Niet-Bolzens 3 gemäß Fig. 5, wobei der erste Schaftabschnitt S1, und der Bund B abschnittsweise, mit einer zweiten Werkstoffkomponente 3.2 umspritzt sind. Der zweite Schaftabschnitt S2 weist eine Sackbohrung auf, in welche in einem späteren Fügevorgang ein Taumelwerkzeug zum Aufspreitzen des Niet-Bolzens 3 eingesetzt wird.

Falls erforderlich kann auch, alternativ oder zusätzlich, der zweite Schaftabschnitt S2 mit der zweiten Werkstoffkomponente 3.2 umspritzt sein.

Fig. 8 und Fig. 9 zeigen einen erfindungsgemäßen Niet-Bolzen 3 mit zwei Lenkern 11 im verbauten Zustand. Die beiden Lenker 11 weisen Lageröffnungen auf, welche dem jeweiligen Durchmesser des umspritzten ersten Schaftabschnitts S1 bzw. dem zweiten Schaftabschnitt S2 entsprechen. Die Materialdicke der Lenker 11 ist der jeweiligen Schaftlänge des ersten Schaftabschnitts S1 und des zweiten Schaftabschnitts S2 entsprechend angepasst.

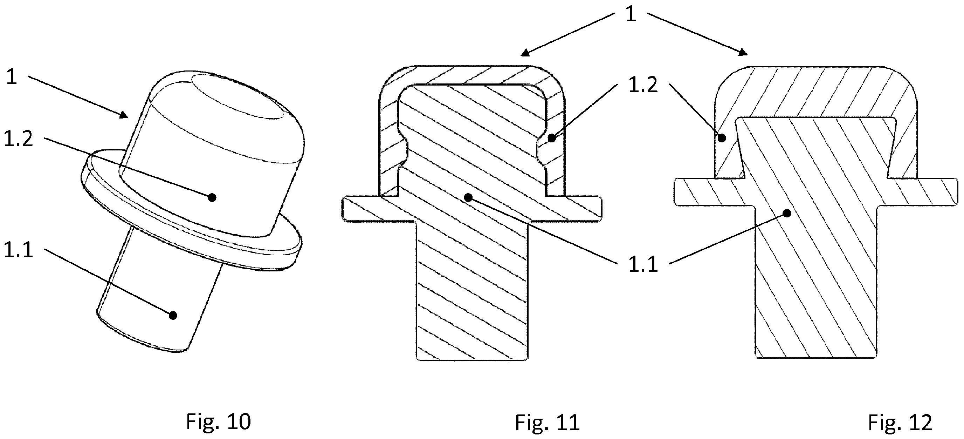

Fig. 10 zeigt einen mit einer zweiten Werkstoffkomponente 1.2 umspritzten Niet-Bolzen 1. Die Umspritzung weist dabei einen Radius auf, welcher größer als 3mm ist. Solche Radien sind im Fahrzeuginnenraum dort gefordert, wo im Falle eines Unfalls ein Kopf eines Fahrzeuginsassen aufschlagen kann, um schwerere Verletzungen zu vermeiden. Dieser Radius lässt sich beim Umspritzen der ersten Werkstoffkomponente 1.1 auf einfache Weise realisieren.

In Fig. 11 und Fig. 12 werden erfindungsgemäße Niet-Bolzen 1 gemäß Fig. 1 und Fig. 2, mit der zweiten Werkstoffkomponente 1.1 umspritzt, im Schnitt dargestellt.

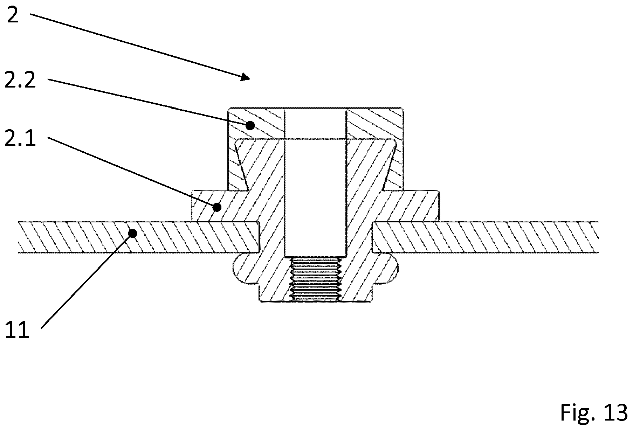

Eine Niet-Mutter 2 kann anlog zu den Darstellungen eines Niet-Bolzens 1, wie in Fig. 11 und Fig. 12 dargestellt, ausgebildet sein. In Fig. 13 ist eine Niet-Mutter 2 im verbauten Zustand dargestellt. Die Umspritzung 2.2 weist in diesem Ausführungsbeispiel keinen 3 mm Radius auf. Auf den Radius kann verzichtet werden, wenn die Niet-Mutter 2 nicht im Fahrzeuginnenraum angeordnet ist. Die Niet-Mutter 2 ist im Bereich der Durchgangsbohrung und des Innengewindes nicht umspritzt, damit ein Setzwerkzeug problemlos in die Niet-Mutter 2 geschraubt werden kann. Während dem Setzen bildet sich im Schaftabschnitt S eine Wulst, wodurch ein Spriegel oder ein Lenker 11 zwischen dem Bund B und der Wulst dauerhaft mit der Niet-Mutter 2 verbunden wird.

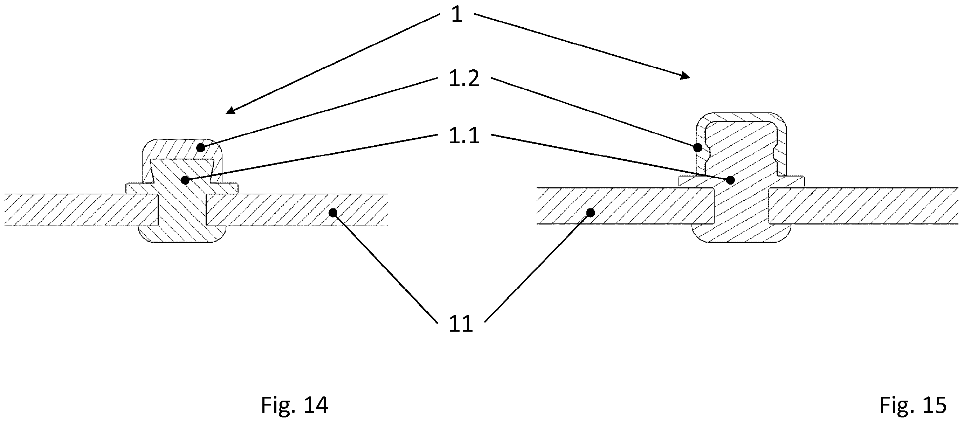

In Fig. 14 und Fig. 15 sind Schnittdarstellungen eines Niet-Bolzens 1 im verbauten Zustand dargestellt. Fig. 14 zeigt einen Niet-Bolzen 1 als vertikaler mechanischer Anschlag ausgebildet, Fig. 15 zeigt einen Niet-Bolzen 1 als seitlicher mechanischer Anschlag ausgebildet.

### Bezugszeichenliste

- 1: Niet-Bolzen
- 1.1: erste Werkstoffkomponente
- 1.2: zweite Werkstoffkomponente
- 2: Niet-Mutter
- 2.1: erste Werkstoffkomponente
- 2.2: zweite Werkstoffkomponente
- 3: Niet-Bolzen
- 3.1: erste Werkstoffkomponente
- 3.2: zweite Werkstoffkomponente
- 11: Lenker

- B: Bund
- K: Kopfabschnitt
- S: Schaftabschnitt
- S1: erster Schaftabschnitt
- S2: zweiter Schaftabschnitt
- U: Umspritzung
- V: Verdrehsicherung

## Patentansprüche

1. Verdeckanordnung für ein Cabriolet, wobei ein Verdeck in eine Offenstellung und in eine Geschlossenstellung bringbar ist, umfassend eine Vielzahl von Spriegeln und Lenkern (11), wobei die Spriegel und Lenker (11) mittels einer antreibbaren Verdeckkinematik relativ zueinander bewegbar sind, und wobei in zumindest einem Verdeckbauteil, ein Niet-Bolzen (1, 3) oder eine Niet-Mutter (2) angeordnet ist, wobei das Verdeckbauteil ein erster Spriegel oder ein erster Lenker (11) oder eine karosseriefeste Lagerstelle ist, welcher als mechanischer Anschlag für einen zweiten Spriegel oder einen zweiten Lenker (11) ausgebildet ist, der relativ zum Verdeckbauteil beweglich ist, wobei der Niet-Bolzen (1, 3) oder die Niet-Mutter (2) aus einem metallischen Werkstoff gefertigt sind,
wobei der Niet-Bolzen (1, 3) oder die Niet-Mutter (2) zumindest an der Kontaktstelle zwischen dem Niet-Bolzen (1, 3) oder der Niet-Mutter (2) und dem zweiten Spriegel oder dem zweiten Lenker (11) einen nichtmetallischen Werkstoff aufweist, wobei der Niet-Bolzen (1) und/oder die Niet-Mutter (2) eine erste Werkstoffkomponente (1.1, 2.1, 3.1) aufweist, wobei die erste Werkstoffkomponente (1.1, 2.1, 3.1) metallisch ist, sowie eine zweite Werkstoffkomponente (1.2, 2.2, 3.2) aufweist, wobei die zweite Werkstoffkomponente (1.2, 2.2, 3.2) nichtmetallisch ist, **dadurch gekennzeichnet, dass** der Niet-Bolzen (1,3) oder die Niet-Mutter (2) als seitlicher mechanischer Anschlag oder als vertikaler mechanischer Anschlag ausgebildet ist, dass die erste Werkstoffkomponente (1.1, 2.1, 3.1) in einem Kopfabschnitt des Niet-Bolzens (1,3) oder der Niet-Mutter (2) geometrisch so ausgebildet ist, dass eine formschlüssige Verbindung zwischen erster Werkstoffkomponente (1.1, 2.1, 3.1) und zweiter Werkstoffkomponente (1.2, 2.2, 3.2) erreicht wird, wobei die zweite Werkstoffkomponente (1.2, 2.2, 3.2) durch Umspritzung zumindest abschnittsweise auf die erste Werkstoffkomponente (1.1, 2.1, 3.1) aufgebracht ist, wobei die Umspritzung des Niet-Bolzen (1) oder der Niet-Mutter (2) im Bereich des Kopfabschnitts ausgebildet ist.

2. Verdeckanordnung nach Anspruch 1,
**dadurch gekennzeichnet, dass** die erste Werkstoffkomponente (1.1, 2.1, 3.1) ein Kaltfließpressteil ist.

3. Verdeckanordnung nach zumindest einem der vorhergehenden Ansprüche,
**dadurch gekennzeichnet, dass** die erste Werkstoffkomponente (1.1, 2.1, 3.1) Stahl ist.

4. Verdeckanordnung nach zumindest einem der vorhergehenden Ansprüche,
**dadurch gekennzeichnet, dass** die zweite Werkstoffkomponente (1.2, 2.2, 3.2) Kunststoff ist.

5. Verdeckanordnung nach zumindest einem der vorhergehenden Ansprüche,
**dadurch gekennzeichnet, dass** die erste Werkstoffkomponente (1.1, 2.1, 3.1) im Bereich der Umspritzung eine Oberflächenstruktur aufweist, welche eine verbesserte stoffschlüssige Verbindung zwischen erster Werkstoffkomponente (1.1, 2.1, 3.1) und zweiter Werkstoffkomponente (1.2, 2.2, 3.2) ermöglicht.

6. Verdeckanordnung nach zumindest einem der vorhergehenden Ansprüche,
**dadurch gekennzeichnet , dass** die Umspritzung des Niet-Bolzen (1) bzw. der Niet-Mutter (2) einen Abrundungsradius von zumindest 3 mm aufweist.

7. Verdeckanordnung nach zumindest einem der vorhergehenden Ansprüche,
**dadurch gekennzeichnet , dass** die erste Werkstoffkomponente (1.1, 2.1, 3.1) im nicht umspritzten Bereich zumindest teilweise einen Oberflächenschutz aufweist.

8. Verdeckanordnung nach zumindest einem der vorhergehenden Ansprüche,
**dadurch gekennzeichnet , dass** der Niet-Bolzen (1) oder die Niet-Mutter (2) den Kopfabschnitt (K), einen Bund (B) und einen Schaftabschnitt (S) umfasst.

9. Verdeckanordnung nach zumindest einem der vorhergehenden Ansprüche,
**dadurch gekennzeichnet , dass** der Niet-Bolzen (1) oder die Niet-Mutter (2) den Kopfabschnitt (K) umfasst, der so ausgebildet ist, dass er als Verliersicherung für die zweite Werkstoffkomponente (1.1, 2.1, 3.1) dient.

10. Verdeckanordnung nach zumindest einem der vorhergehenden Ansprüche,
**dadurch gekennzeichnet, dass** der Kopfabschnitt (K) zum Bund (B) bzw. in Richtung Schaft (S) verjüngt ausgebildet ist, insbesondere bei Ausbildung als vertikaler mechanischer Anschlag.

11. Verdeckanordnung nach zumindest einem der vorhergehenden Ansprüche,
**dadurch gekennzeichnet, dass** der Kopfabschnitt (K) zumindest eine Vertiefung und/oder Erhöhung in Umfangsrichtung aufweist, insbesondere bei Ausbildung als seitlicher mechanischer Anschlag.

12. Verdeckanordnung nach Anspruch 1, **dadurch gekennzeichnet, dass** eine weitere Umspritzung des Niet-Bolzens (3) im Bereich eines ersten Schaftabschnitts (S1) ausgebildet ist.

13. Verdeckanordnung nach Anspruch 12, **dadurch gekennzeichnet, dass** zumindest am ersten Schaftabschnitt (S1) in Längsrichtung zumindest eine Vertiefung und/oder Erhöhung ausgebildet ist.

14. Verdeckanordnung nach Anspruch 12, **dadurch gekennzeichnet, dass** am ersten Schaftabschnitt (S1)und an einem zweiten Schaftabschnitt (S2) des Niet-Bolzens (3) jeweils ein Spriegel und/oder Lenker (11), relativ zueinander drehbar, gelagert sind.

## Claims

1. Roof assembly for a convertible, wherein a roof is able to be moved into an open position and into a closed position, comprising a multiplicity of roof bows and links (11), wherein the roof bows and links (11) are movable relative to one another by means of drivable roof kinematics, and wherein, in at least one roof component, a rivet (1, 3) or a rivet nut (2) is arranged, wherein the roof component is a first roof bow or a first link (11) or a body-mounted bearing point that is configured as a mechanical stop for a second roof bow or a second link (11) that is movable relative to the roof component, wherein the rivet (1, 3) or the rivet nut (2) is produced from a metallic material,
wherein the rivet (1, 3) or the rivet nut (2) has a non-metallic material at least at the contact point between the rivet (1, 3) or the rivet nut (2) and the second roof bow or the second link (11), wherein the rivet (1) and/or the rivet nut (2) has/have a first material component (1.1, 2.1, 3.1), wherein the first material component (1.1, 2.1, 3.1) is metallic, and has/have a second material component (1.2, 2.2, 3.2), wherein the second material component (1.2, 2.2, 3.2) is non-metallic, **characterized in that** the rivet (1, 3) or the rivet nut (2) is configured as a lateral mechanical stop or as a vertical mechanical stop, **in that** the first material component (1.1, 2.1, 3.1) is formed geometrically in a head portion of the rivet (1, 3) or of the rivet nut (2) such that a form-fitting connection between the first material component (1.1, 2.1, 3.1) and second material component (1.2, 2.2, 3.2) is achieved, wherein the second material component (1.2, 2.2, 3.2) is applied at least locally to the first material component (1.1, 2.1, 3.1) by overmoulding, wherein the overmoulding of the rivet (1) or of the rivet nut (2) is formed in the region of the head portion.

2. Roof assembly according to Claim 1,
**characterized in that** the first material component (1.1, 2.1, 3.1) is a cold extruded part.

3. Roof assembly according to at least one of the preceding claims,
**characterized in that** the first material component (1.1, 2.1, 3.1) is steel.

4. Roof assembly according to at least one of the preceding claims,
**characterized in that** the second material component (1.2, 2.2, 3.2) is plastic.

5. Roof assembly according to at least one of the preceding claims,
**characterized in that** the first material component (1.1, 2.1, 3.1) has, in the region of the overmoulding, a surface structure that allows an improved materially bonded connection between the first material component (1.1, 2.1, 3.1) and second material component (1.2, 2.2, 3.2).

6. Roof assembly according to at least one of the preceding claims,
**characterized in that** the overmoulding of the rivet (1) or of the rivet nut (2) has a radius of curvature of at least 3 mm.

7. Roof assembly according to at least one of the preceding claims,
**characterized in that** the first material component (1.1, 2.1, 3.1) at least partially has a surface protection in the non-overmoulded region.

8. Roof assembly according to at least one of the preceding claims,
**characterized in that** the rivet (1) or the rivet nut (2) comprises the head portion (K), a flange (B) and a shank portion (S).

9. Roof assembly according to at least one of the preceding claims,
**characterized in that** the rivet (1) or the rivet nut (2) comprises the head portion (K), which is configured such that it serves as a loss prevention means for the second material component (1.1, 2.1, 3.1).

10. Roof assembly according to at least one of the preceding claims,
**characterized in that** the head portion (K) is configured in a manner narrowing towards the flange (B) or in the direction of the shank (S), in particular when configured as a vertical mechanical stop.

11. Roof assembly according to at least one of the preceding claims,
**characterized in that** the head portion (K) has at least one recess and/or protuberance in the circumferential direction, in particular when configured as a lateral mechanical stop.

12. Roof assembly according to Claim 1,
**characterized in that** further overmoulding of the rivet (3) is formed in the region of a first shank portion (S1).

13. Roof assembly according to Claim 12,
**characterized in that** at least one recess and/or protuberance is formed at least on the first shank portion (S1) in the longitudinal direction.

14. Roof assembly according to Claim 12,
**characterized in that** a roof bow and/or link (11) is/are mounted, so as to be rotatable relative to one another, on each of the first shank portion (S1) and a second shank portion (S2) of the rivet (3).

## Revendications

1. Agencement de toit pour un cabriolet, un toit pouvant être amené dans une position ouverte et dans une position fermée, comprenant une pluralité d'arceaux et de bras (11), les arceaux et les bras (11) pouvant être déplacés les uns par rapport aux autres au moyen d'une cinématique de toit pouvant être entraînée, et un boulon de rivet (1, 3) ou un écrou de rivet (2) étant disposé dans au moins un composant du toit, le composant de toit étant un premier arceau ou un premier bras (11) ou un point de palier fixé à la carrosserie qui est réalisé en tant que butée mécanique pour un deuxième arceau ou un deuxième bras (11) qui est déplaçable par rapport au composant de toit, le boulon de rivet (1, 3) ou l'écrou de rivet (2) étant fabriqués à partir d'un matériau métallique,
le boulon de rivet (1, 3) ou l'écrou de rivet (2) présentant un matériau non métallique au moins au point de contact entre le boulon de rivet (1, 3) ou l'écrou de rivet (2) et le deuxième arceau ou le deuxième bras (11), le boulon de rivet (1) et/ou l'écrou de rivet (2) présentant un premier composant de matériau (1.1, 2.1, 3.1), le premier composant de matériau (1.1, 2.1, 3.1) étant métallique, ainsi qu'un deuxième composant de matériau (1.2, 2.2, 3.2), le deuxième composant de matériau (1.2, 2.2, 3.2) n'étant pas métallique, **caractérisé en ce que**
le boulon de rivet (1, 3) ou l'écrou de rivet (2) est réalisé sous forme de butée mécanique latérale ou sous forme de butée mécanique verticale, **en ce que** le premier composant de matériau (1.1, 2.1, 3.1) est réalisé sous forme géométrique dans une portion de tête du boulon de rivet (1, 3) ou de l'écrou de rivet (2) de telle sorte qu'une liaison par engagement par correspondance de formes entre le premier composant de matériau (1.1, 2.1, 3.1) et le deuxième composant de matériau (1.2, 2.2, 3.2) soit réalisée, le deuxième composant de matériau (1.2, 2.2, 3.2) étant appliqué par surmoulage au moins en partie sur le premier composant de matériau (1.1, 2.1, 3.1), le surmoulage du boulon de rivet (1) ou de l'écrou de rivet (2) étant réalisé dans la région de la portion de tête.

2. Agencement de toit selon la revendication 1,
**caractérisé en ce que** le premier composant de matériau (1.1, 2.1, 3.1) est une pièce extrudée à froid.

3. Agencement de toit selon au moins l'une quelconque des revendications précédentes,
**caractérisé en ce que** le premier composant de matériau (1.1, 2.1, 3.1) est de l'acier.

4. Agencement de toit selon au moins l'une quelconque des revendications précédentes,
**caractérisé en ce que** le deuxième composant de matériau (1.2, 2.2, 3.2) est du plastique.

5. Agencement de toit selon au moins l'une quelconque des revendications précédentes,
**caractérisé en ce que** le premier composant de matériau (1.1, 2.1, 3.1) présente dans la région du surmoulage une structure de surface qui permet une liaison de matière améliorée entre le premier composant de matériau (1.1, 2.1, 3.1) et le deuxième composant de matériau (1.2, 2.2, 3.2).

6. Agencement de toit selon au moins l'une quelconque des revendications précédentes,
**caractérisé en ce que** le surmoulage du boulon de rivet (1) ou de l'écrou de rivet (2) présente un rayon de courbure d'au moins 3 mm.

7. Agencement de toit selon au moins l'une quelconque des revendications précédentes,
**caractérisé en ce que** le premier composant de matériau (1.1, 2.1, 3.1) présente au moins en partie une protection de surface dans la région non surmoulée.

8. Agencement de toit selon au moins l'une quelconque des revendications précédentes,
**caractérisé en ce que** le boulon de rivet (1) ou l'écrou de rivet (2) comprend la portion de tête (K), un épaulement (B) et une portion de tige (S).

9. Agencement de toit selon au moins l'une quelconque des revendications précédentes,
**caractérisé en ce que** le boulon de rivet (1) ou l'écrou de rivet (2) comprend une portion de tête (K) qui est réalisée de telle sorte qu'elle serve de fixation imperdable pour le deuxième composant de matériau (1.1, 2.1, 3.1).

10. Agencement de toit selon au moins l'une quelconque des revendications précédentes,
**caractérisé en ce que** la portion de tête (K) est réalisée de manière rétrécie vers l'épaulement (B) ou dans la direction de la tige (S), en particulier dans le cas d'une réalisation en tant que butée mécanique verticale.

11. Agencement de toit selon au moins l'une quelconque des revendications précédentes,
**caractérisé en ce que** la portion de tête (K) présente au moins un renfoncement et/ou un rehaussement dans la direction périphérique, en particulier dans le cas d'une réalisation en tant que butée mécanique latérale.

12. Agencement de toit selon la revendication 1,
**caractérisé en ce qu'**un surmoulage supplémentaire du boulon de rivet (3) est réalisé dans la région d'une première portion de tige (S1).

13. Agencement de toit selon la revendication 12,
**caractérisé en ce qu'**au moins un renfoncement et/ou un rehaussement est réalisé au moins au niveau de la première portion de tige (S1) dans la direction longitudinale.

14. Agencement de toit selon la revendication 12,
**caractérisé en ce qu'**à chaque fois un arceau et/ou un bras (11) sont supportés de manière à pouvoir tourner l'un par rapport à l'autre au niveau de la première portion de tige (S1) et au niveau d'une deuxième portion de tige (S2) du boulon de rivet (3).
